# EUROPEAN PATENT SPECIFICATION

(11) **EP 2 682 659 B1**
(45) Date of publication and mention of the grant of the patent: **07.09.2016**
(21) Application number: 12005017.4
(22) Date of filing: 06.07.2012
(51) Int. Cl.: F16L 25/01, F16L 27/02, F16L 27/10, F16L 37/12, F16L 23/04

(54) **Coupling device**
Kupplungsvorrichtung
Dispositif de couplage

(43) Date of publication of application: 08.01.2014
(73) Proprietor: PFW Aerospace AG, 67346 Speyer (DE)
(72) Inventor: Hartmann, Jürgen, 67112 Mutterstadt (DE); Gelbrich, Stefan, 82205 Gilching (DE); Kaufmann, Andreas, 67346 Speyer (DE); Kaufmann, Caroline, 67354 Römerberg (DE)
(74) Representative: Hörschler, Wolfram Johannes

(56) References cited:
- US-A- 4 008 937
- US-A- 4 621 840
- US-A- 4 881 760

## Description

### Field of the Invention

The present invention relates to a coupling device for releasably coupling fluid-carrying duct ends of ducts, particularly for use in aircraft or aerospace applications.

### Prior Art

US 5,188,400 is related to a spring loaded coupling with a positive spring latch. This coupling device is used for releasably interconnecting confronting ends of first and second fluid carrying conduits. A pair of symetrical arcuate coupling halves are preferably joint together at first adjacant ends for circumferentially surrounding the conduit ends. A latch is mounted adjacant the opposite end of one of the halves. This latch includes a flange having a slot opening outwardly and an outwardly extending flat spring lock terminating an end surface. A toggle is provided which has a first end pivotally adjacant the opposite end of the other of the halves. Further that toggle has a second end extendable longitudinal beyond the opposite end of the first of the halves. The toggle includes a locking pin adjacant the second end of the toggle engageable with the slot when the coupling halves are closed around the sleeve. That toggle includes a spring urging the toggle to pivot in a direction to move the locking pin into the slot. A cam is provided for rotating the toggle against the force of the leaf spring as the coupling halves are closed to cause the locking pin to clear the flange and drop into the slot to form a primarely lock. An aperture adjacent the second end of the toggle receive the spring lock which snaps into a lock position to form a secondary lock. The coupling may have spherical shoulders to reduce localized stresses and forces. Components of the spring loaded coupling scratch on the surface of the arcuate coupling halves, thus corrosion may occur on said arcuate coupling halves.

US 4,881,760 A is related to a conduit coupling device with redundancy features. According to this United Stated patent, a coupling assembly is disclosed for connecting adjacent ends
of conduits, primarily used for aircraft fuel lines having redundant lock features. This coupling can be manipulated with one hand and includes a central tine and laterally spaced locking tines which engage a mating channel for locking the coupling in secured relationship. Indicia are provided across the locking tines which is not visible when the coupling assembly is completely and securely closed. The coupling assembly can be manipulated with one hand only and comprises viewing ports to be sure that all parts are in the place. Also the tines and guide members are configured to create a force between the two longitudinal components tending to open the assembly. Components of the spring loaded coupling scratch on the surface of arcuate coupling halves, thus corrosion may occur on the circumference surface of said arcuate coupling halves.

### Summary of the invention

An object of the present invention is to provide for a fluid-tight coupling device for releasably connecting fluid-carrying duct ends which is easily to be surveyed by the human eye without requiring complicated measuring devices, which is significantly reduced in its size and weight and which is easily to be mounted upon assembly of an aircraft or an areospace vehicle.

According to the present invention a coupling device is disclosed in the appended claims, which is used for releasably connecting confronting fluid-carrying duct ends of ducts in an aircraft or an aerospace vehicle. That duct ends each carry a jacket which is mounted tight to said duct ends. Said jackets each comprise at least two annular ribs between which a first annular sealing element, such as an O-ring, is mounted which in turn is engaged on its upper side by an inner shell of the coupling device according to the present invention.

Said coupling device includes an outer shell which may comprise two interconnected shell sections, each having radially inwardly extending ribs or rib sections, which are either arranged in an axial direction of a further annular rib of that jackets, or, on the other hand, radially inwardly extending rib or rib sections engage an axial recess provided in that jacket, that axially extending recess defined between said further annular rib and an additional fourth annular rib provided on said jackets.

The solution according to the present invention allows the duct ends to relatively move with respect to each other without losing the fluid tight connection, since - due to the axial distance between the ribs of the outer shell and the further rib on the jacket - an axial movement is feasible. In the alternative, inwardly extending radially ribs, preferably arranged at the end portions of said outer shell or that outer shell sections, respectively, may engage into a recess which is defined - in axial direction - between said further annual rib and an additional fourth rib arranged on the outer circumference of said jackets. Due to both alternatives of the present invention an axial movement of said confronting duct ends is feasible. This means, that a maximum gap width of a few millimeters can be allowed and as well as a "face to face" - arrangement between said duct ends in the mounted stage. Further to the relative movements within a horizontal plane, the solution according to the present invention allows for angled orientations of said duct ends with respect to one another. By this, mounting tolerances or the mounting of said coupling device according to the present invention is significantly easier, since duct ends can be mounted in an angled orientation with respect to one another, which is much more easier for the assembling personal to handle.

Preferably, the coupling device according to the present invention, comprises a second annular shaped sealing element which either is arranged on the outer circumference of said jacket or which may be provided on the inner conference of said jackets. In an alternative embodiment, both sealing elements, i.e. the first and the second annular shaped sealing element may be arranged on the outer circumference of said jackets, each of the sealing elements being housed by annular ribs and each of the sealing elements covered by an inner shell of the coupling device according to the present invention.

It is worthwhile mentioning, that the duct ends and the jackets tightly arranged on the outer circumference of said duct ends are manufactured of plastic material which allows for a significant reduction of weight of these components, when compared to solutions using metal components. Basically, said duct ends and said jackets tightly arranged on the outer circumference of said duct ends are made of a high-performance thermoplastic material such as PEEK and PPS to name but a few. The material chosen, i.e. said thermoplastic material is resistant against aggressive liquids and resistant in terms of not deformable with respect to a wide temperature range between -50°C and 100°C. The high performance plastic material may be reinforced by fibers or by glass fibers to give an example.

Preferably, the outer shell is made of two shell sections which are connected with one another within connecting regions. To achieve this, said shells made of plastic material are provided with elastic hook-shaped elements which snap into openings of the complementary shell section to be connected with. To increase mechanical stability of the coupling device said outer shell or said outer shell section, respectively, surround said inner shell of the coupling device in its entirety i.e. about 360 °, seen in circumferential direction. In its mounted stage, said outer shell is surrounded by at least one or two cable ties which may easily be fixed around the outer circumference of the outer shell and exert a significantly clamping force onto the coupling device in its mounted stage. Said shells are like parts, i.e. the shell, being clamped identical, each being provided with an opening on one end and on the other hand having an elastically hooked-shaped element.

To allow for an easy inspection of the connecting areas between confronting duct ends which are fixed by the coupling device according to the present invention, said outer shell may comprise on its outer circumference a number of openings. Said openings allow for an easy inspection of the inner shell. Said inner shell may comprise on its outer circumference a ribbed structure on the one hand to reduce weight and on the other hand to reinforce said component. Depending on the ribbed structure being formed on the outer circumference the mechanical reliability or the mechanical rigidity of said component can be defined upon design thereof.

A further feature of the present invention worthwhile mentioning are the jackets which are tightly fastened on the circumference of said duct ends. To this end, said jackets may be laser welded with said duct ends or glued onto said duct ends. In the alternative a glue-fill-in-opening is provided on the circumference of said jackets to inject glue from the outer surface of jackets into the annular gap between the duct ends and the inner circumference of said jackets. Said jackets comprise markers, which may be manufactured in a substantially triangular shape. This allows to identify the relative position of a jacket - which is tightly mounted on the circumference of the duct end - with respect to the coupling device. If a larger part of said markings being shaped in triangular fashion can be recognized by an inspection person, this indicates a larger gap width between said confronting duct ends connected by the coupling device. If, however, only a small part of said triangularly shaped markers, on both sides of the rim of the coupling device is visible for inspection persons, this indicates a stage of said confronting duct ends, which is close to a "face to face" position of said duct ends. Further, if only the markers of only one jacket of the duct ends is visible, and the markers of the opposite jacket of the respective opposite duct ends are not visible, indicates to an inspection personal, that the connection of both fronting duct ends is assymetrical.

In each of the stages sketched above, the two annular sealing elements, i.e. commonly O-rings, manufactured of an elastic material, provide for a fluid tight connection of said fluid carrying duct ends even if said duct ends have moved with axial direction or in angular orientation with respect to one another. The axial length of the outer shell of the coupling device according to the present invention allows for axial displacement of said duct ends with respect to each other as well as of angular displacement of said duct ends to be releasably connected to one another.

Provided the components of said coupling according to the present invention are made of an electrically conducting material and provided the annular shaped O-rings feeding elements are made of an electrically conducting material, an electrical connection is established by means of said coupling according to the present invention. Likewise said coupling made of an electrically conducting material serves the purpose of an electrostatic discharging device. In contrast to coupling devices made of a metallic conductive material, which use generally flat rectangular connectors, this is not necessary with the coupling device according to the present invention, where the components form the electrical conductors themselves.

The coupling device according to the present invention allows for a much safer handling upon mounting, it is very flexible and may compensate for relative movements of the duct ends connected in a fluid-tight manner. The at least one cable tie arrangement is an additional safety feature, thus an unintentional opening of the coupling is prevented by, in case two cable ties, preferably made of plastic material, are used, redundancy is established as well. The high performance plastic material such as PEEK and PPS are very smooth, i.e. no solids tend to adhere and inner circumference of said ducts.

### Brief Description of the Drawings

The present invention is described in more detail with reference to the accompanying drawings, in which:
Figure 1 shows a side view of a first embodiment of the coupling device according to the present invention,
Figure 2 shows a side view of the coupling device according to the first embodiment of the present invention,
Figure 3 shows a cross section of the first embodiment, the cross section indicated in figure 2,
Figure 4 shows a cross section of the first embodiment of the coupling device according to cross section IV - IV indicated in figure 1,
Figure 5 shows a second embodiment of the coupling device of the present invention using two cable ties,
Figure 6 shows a side view of the second embodiment of the coupling device according to the present invention,
Figure 7 shows a cross section according to VII-VII through the second embodiment of the coupling device as indicated in figure 5,
Figure 8 shows a further detail of the second embodiment given in figure 5,
Figure 9 shows a detail of the second embodiment of the coupling device according to figure 7,
Figure 10 shows a third embodiment of the coupling device according to the present invention sealing elements arranged on the outer circumference between radially extending ribs of said jackets,
Figure 11 shows in greater detail the coupling device's outer and inner shells and the sealing elements housed therein and
Figure 12.1-12.4 show different stages of axial displacements and angular displacements of the jackets and ducts, releasably connected by the coupling device according to the present invention.

### Preferred Embodiments:

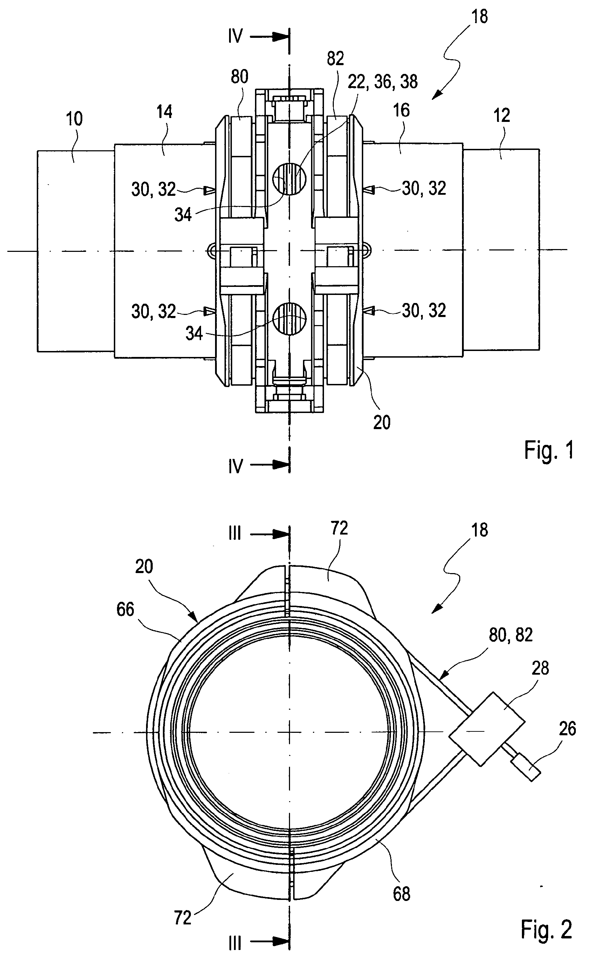

Figure 1 shows a side view of a first embodiment of the coupling device according to the present invention.

According to figure 1 a coupling device 18 according to the present invention releasably connects a confronting first duct end 10 with an oppositely arranged second duct end 12. Said first duct end 10 and said second duct end 12 constitute the end portions of ducts - not shown in greater detail in figure 1 - through which fluids such as fresh water, waste water, fuel or hydraulic fluid is transported within an aircraft or an aerospace appliance.

On said duct levels 10, 12 respectively, a first jacket 14 and a second jacket 16 are arranged tightly fitted, laser welded or by means of an adhesive or a glue. Said duct ends 10, 12 constitute end portions of ducts made of a high-performance, non-metallic material such as PEEK or PPS.

According to the present invention, said jackets 14, 16 tightly arranged on the said outer circumference of the first duct end 10 and the second duct end 12, respectively, are releasably connected by means of said coupling device 18. Said coupling device 18, comprises an outer shell 20 made of a non-metallic material such as PEEK. The tight connection between the respective duct ends 10, 12, respectively and said jackets 14, 16, respectively, is established by means of gluing or welding, said techniques additionally provide for establishing an electrical conducting connection between said components if required.

The outer shell 20 may comprise a first outer shell section 66, and a second outer shell section 68, as shown in the view according to figure 2, further described below. Said outer shells 66, 68 respectively, are in general identical parts, each having an opening 70 and a bent, elastically hook-shaped element 74, further described below. The outer shell, which may be preferably manufactured of a non-metallic material such as a high performance plastic material, surrounds an inner shell 22, which likewise preferably is made of a non-metallic material or which may be manufactured of a metallic material as well. Said inner shell 22 of the coupling device 18 according to the present invention is only partially shown, since openings 34, a number of which is provided in the outer shell 20, allow visibility of the inner shell 22. Said inner shell 22 is provided on its outer circumference 36 with a rib-structure 38, said rib structure 38 extending substantially in the circumferential direction of said inner shell 22 surrounded by that outer shell 20.

The first embodiment of the coupling device 18 according to the present invention comprises a at least one cable tie arrangement 80, 82. To increase mechanical stability and rigidity of the coupling device 18, the coupling device 18 is - after been mounted on said jackets 14 und 16 - pretensioned by said at least one cable tie arrangement 80, 82. At least one cable tie arrangement 80, 82 according to figure 2 comprises a cable tie end 26 and a cable tie cage 28 for tensioning said at least one cable tie 80, 82 and to compress said outer shell 20 of the coupling device 18. Still further in Figure 1 it can be seen, that on the outer circumference said jackets 14, 16 respectively, markers 30 are provided. Said markers 30 in the first embodiment of the coupling device 18 according to figure 1 have an substantially triangular shape 32, but alternatively may adopt another geometry. Said markers 30 are provided on the outer circumference of the jackets 14 and 16 adopting an inclination angle so that they gradually protrude from the flat outer circumference of the sleeve-shaped jackets 14, 16. Said markers 30 may be recessed or simply be painted on the surface of said jackets 14, 16, respectively as well.

By means of said markers 30 the relative position of the jackets 14, 16 towards the outer shell 20 of said coupling device 18 can be determined easily by inspecting personal. By means of said markers 30 a width of an insulation gap between said confronting duct can be checked and surveyed.

Figure 2 shows a side view of the first embodiment of the coupling device according to figure 1.

When seen from the left hand or right hand side, the first embodiment of the coupling device 18 according to the present invention on its outer circumference comprises connecting regions 72, within which the outer shell sections 66, 68, respectively, are connected with each other. This is established by means of an elastically hook-shaped elements 74, which like a snap-in connection dive into openings 70 - further described below - to tightly connect said outer shell sections 66, 68 with each other, resulting in an outer shell 20 surrounding said jackets 14, 16 about an angle of 360 °. In the side view according to figure 2 it can be derived that said cable tie ends 26 are fixed by means of the cable tie cage 28. In general, said shell sections 66, 68 are identical components.

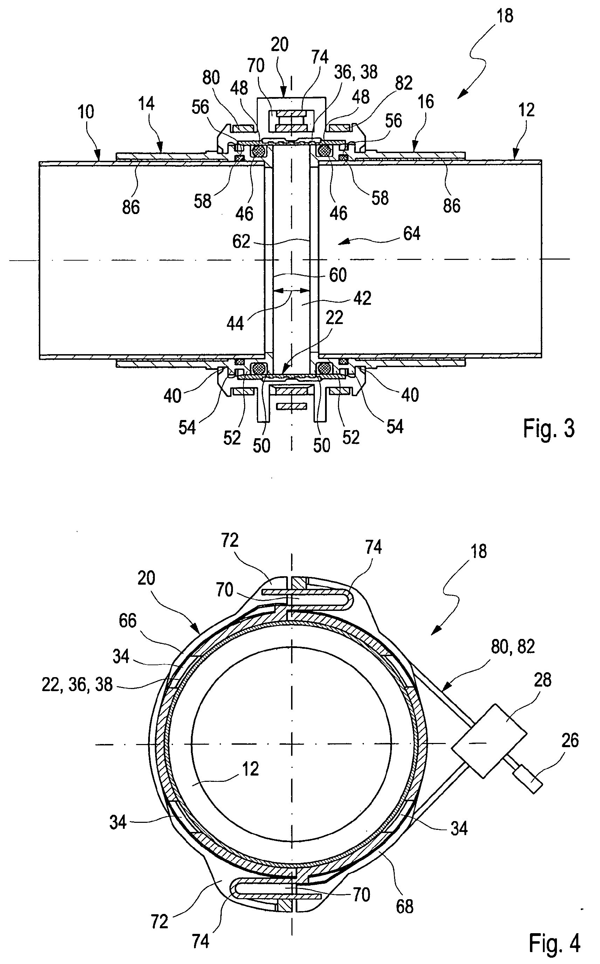

Figure 3 shows a cross section to the first embodiment in a horizontal plane according to figure 1.

According to figure 3 said jackets 14, 16, respectively, are securely fastened on the outer circumference of said duct ends 10, 12, respectively. Said duct ends 10, 12 each comprise end faces 60, 62 which confront each other. In the embodiment shown in figure 3, there exists a gap 42 between the confronting end faces 60, 62. A gap width of said gap 42 is labelled with reference numeral 44.

In the cross section according to figure 3 each of said jackets 14, 16, comprises a first annular shaped sealing element 46. Said first annular shape sealing element 46 is embedded between a first annular rib 50 and a second annular rib 52 provided on the outer circumference of said jackets 14, 16, respectively. Said first annular rib 50 and second annular rib 52 define an outer recess 48 in which said first annular shaped sealing element 46 is arranged. Said jackets 14, 16 furthermore, each may comprise an inner recess 56 in which a second annular shaped sealing element 58 is embedded. Said second annular shaped sealing element 58 provides for a seal between said end portions of the duct ends 10, 12 and the jackets 14, 16 surrounding said duct ends 10, 12. The previously mentioned first annular shaped sealing element 46 provides for a sealing between the jackets 14 and 16 on the one hand and the inner shell 22 of the coupling device 18 on the other hand. As can be derived from the cross section to figure 3, said outer shell 20 having a first outer shell section 66 and a second outer shell 68, respectively, comprises on its circumference radially inward extending ribs or rib portions 40. Said inner ribs or inner rib portions 40 are located at the axial ends of said outer shell 20 or outer shell sections 66, 68, respectively. Said inwardly extending radial ribs 40 are oriented within a distance from the further annular rib 54 i.e. a third annular rib, arranged on the outer circumference of said jackets 14, 16. Due to the distance between the further annular rib 54 on the one hand and the inner radial ribs or ring portions 40 extending from the inner circumference of said outer shell 20 on the other hand, an axial displacement between the duct ends 10,12 i.e. said endfaces 60, 62 is feasible. This allows for a relative movement of the duct ends 10, 12 i.e. the jackets 14, 16 with respect to one another. Due to the sealing elements i.e. commonly shaped as O-rings made of a material of an elastic material, even upon a relative movement of said duct ends 10, 12 with respect to one another, said fluid-carrying end ducts 10, 12 are sealed against the outer surrounding i.e. no fluid escapes via jackets 14, 16 between the circumferences of said jackets 14, 16 and the outer circumference of said end ducts 10, 12 due to the second annular shaped sealing element 58. No fluid escapes between the first annular shaped sealing element 46 arranged in the outer recess 48 of the jackets 14, 16 being covered by the inner shell 22 of the coupling device 18 according to the present invention.

Since a relative movement between the duct ends 10, 12 is feasible, mounting tolerances and/or tolerances which occur during operation of the duct ends 10, 12 i.e. the ducts being mounted in an aircraft, can easily be compensated for, without a leakage of liquid out of the coupling device 18 in its first embodiment according to the present invention.

Figure 4 shows a cross section of the first embodiment of the coupling device 18 according to the present invention along the line IV-IV in figure 1.

In the cross section according to figure 4 the outer shell 20 is formed by the first outer shell section 66 and the second outer shell section 68 which are engaged with one another within said connection regions 72 as previously mentioned in connection with figure 2. According to the cross section in figure 4 each of said outer shell sections 66, 68, respectively, comprises a hook-shaped element 74 and an opening 70. Upon engagement of both outer shell sections 66, 68 with one another, the elastic hook-shaped element 74 of one of the outer shell sections 66, 68 engage a respective opening 70 of the other of the outer shell sections 66, 68, thus forming an entire outer shell 20 completely surrounding said jackets 14, 16 about 360 °.

The engagement of both outer shell sections 66, 68 is secured by the at least one cable tie 80, 82 the end portions 26 of which are engaged by a cable tie cage 28. Upon connection of the outer shell sections 66, 68 with one another, said connection is secured by means of at least one cable tie 80, 82. In the cross sections according to figure 4 the outer shell 20 i.e. the outer shell sections 66, 68 each have a number of openings 34 through which the inner shell surface 36 of the inner shell 22 is visible for inspection purposes, for instance to check that said inner shell 22 is installed correctly.

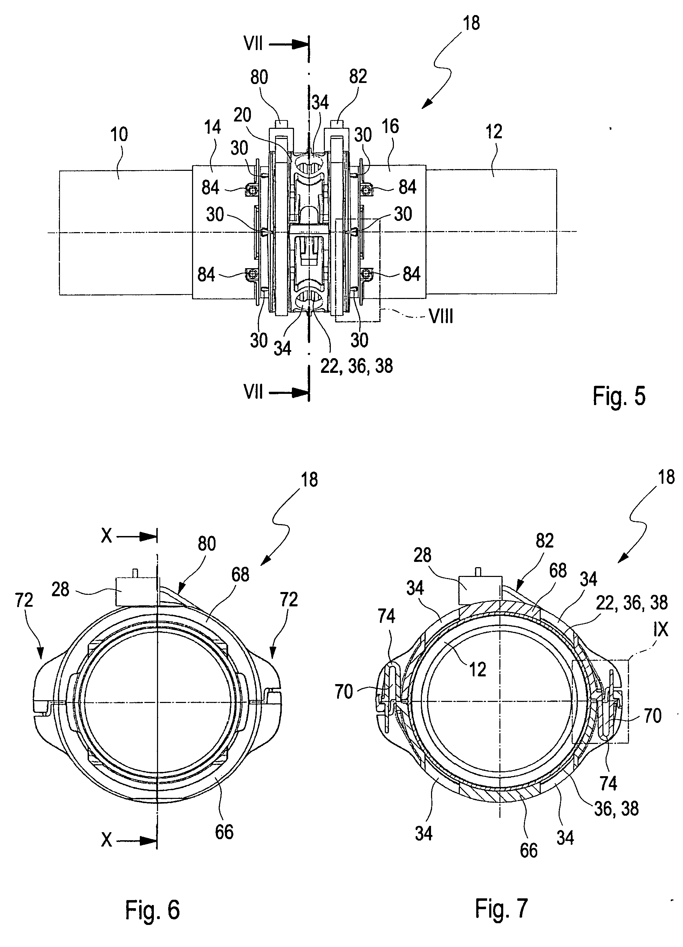

Figure 5 shows a second embodiment of the coupling device 18 according to the present invention in a side view.

According to figure 5 on said duct ends 10, 12 each a jacket 14, 16 is mounted. Both duct ends 10, 12 i.e. said first and second jackets 14, 16 are releasably connected to one another by means of said coupling device 18. Said coupling device 18 comprises the outer shell 20 as previously mentioned, comprising interconnected outer shell section 66, 68. By means of openings 34 the inner shell surface 36 of the inner shell 22 is visible.

Said second embodiment of the coupling device is secured by means of a first and a second cable tie arrangement 80, 82, respectively. Details of said second embodiments are given according to the cross section VII - VII in figure 5, in figure 7, as described below.

In the side view according to figure 5, on the outer circumference of said jackets 14, 16 markers 30 are placed, having in principle a triangular shape 32 as previously discussed in connection with figure 1. By means of said markers 30, which may be positioned in inclined angle on the outer circumference of said jackets 14, 16 or may be simply printed or painted on said surfaces of said sleeve shaped jackets 14, 16, respectively, a respective width of an insulation gap between the confronting duct ends 10, 12 can be determined and surveyed by inspection personnel. Said markers 30 in the embodiment according to figure 5 have a substantially triangular shape, but it is conceivable as well to shape them in a different geometry. The openings 34 provided in said outer shell 20 allow for visibility of the outer surface of the inner shell 22. The inner shell comprises a mantle 36 having a ribbed structure 38 said ribs extending substantially in circumferential direction. The ribbed structure 38 on the outer circumference of said inner shell 20 defines mechanical rigidity of the inner shell 22 which can be made of high-performance plastic material such as PEEK or PPS or of metal material. As can be derived from figure 3 concerning the first embodiment and the embodiment given in figure 5, said adhesive or glue 86 is injected by means of glue-fill-in-openings 84 provided on the outer circumference of said jackets 14, 16, respectively. By an injection tool said glue 86 is injected in the gap between the inner circumference of said jacket 14, 16, respectively and the outer surface of said duct ends 10, 12, respectively. Alternatively, a tight fit of said jackets 14, 16, respectively on the outer surfaces of said duct ends 10, 12 can be achieved by a laser welding or by welding. Figure 6 shows a side view of the second embodiment of the coupling device 18 according to the present invention, given in figure 5.

Figure 6 reveals, that said outer shell 20 comprises a first outer shell section 66, and a second outer shell section 68 engaged with one another within a connecting region 72. Reference numeral 28 identifies a cable tie cage within a first cable tie 80 being pretensioned, so that the first outer shell section 66 and the second outer shell section 68 are secured in circumferential direction, to prevent the assembly of unintentional opening. Figure 7 shows a cross section through the coupling device 18 according to the cross section VII - VII as shown in figure 5.

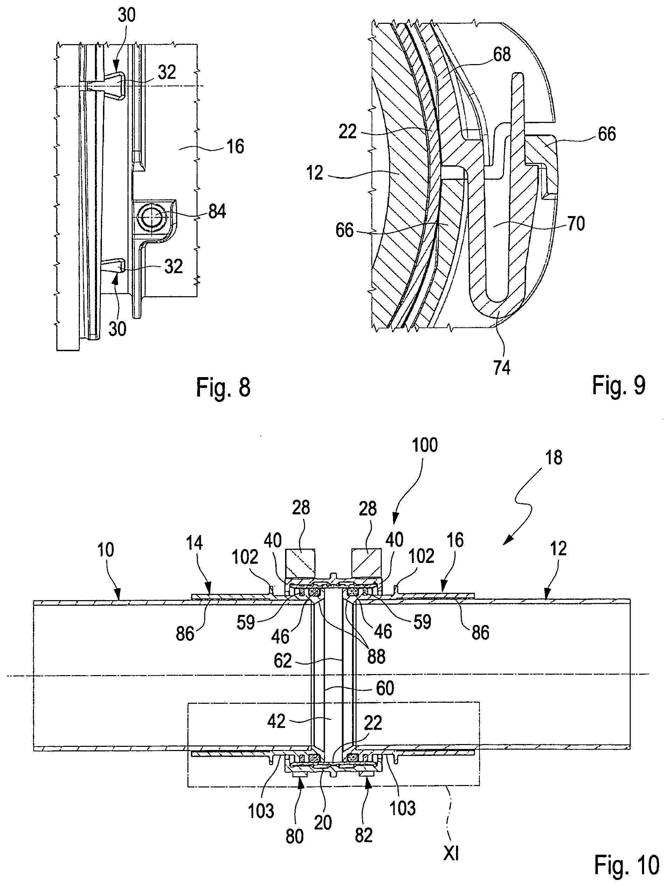

According to the cross section given in figure 7, said first outer shell section 66 and that second outer shell section 68 are engaged within each other by means of the elastic hook-shaped element 74 engaging a respective opening 70 of the respective other one of said outer shell sections 66, 68. In the cross section given in figure 7, said outer shell sections 66, 68, respectively, comprise openings 34 through which the inner shell surface 36 of the inner shell 22 is visible. Said inner shell's outer surface 36 comprises a ribbed - structure 38 extending substantially in circumferential direction, defining a required mechanical rigidity. The cable tie's 80, 82, being pretensioned in circumferential direction by means of the cable tie cage 28, provide for a tight fit between the first outer shell section 66, engaging said second outer shell section 68, i.e. resulting in an outer shell 20 surrounding said jackets 14, 16, respectively, about 360° to be releasably connected with one another. Figure 8 shows, that on said second jacket 16 i.e. on the surface thereof, markers 30, having an substantially a triangular shape 32 are provided. Said markers 30 have a shape which can be characterized, by that they protrude from the outer circumference of said second jacket 16 in radial direction Instead of being in triangular shape, protruding in an inclination angle radially away from the surface of said jackets 14, 16, respectively, said markers 30 may be printed onto said surface or simply painted. Both alternatives are conceivable as well. By reference numeral 84 glue-fill-in-openings are identified by means of which a glue or an adhesive is injected by an injection tool into a gap which said jackets 14, 16 on the one hand are tightly connected to said duct ends 10, 12 on the other. A glue or adhesive material is given in figure 10 and 3, respectively, labelled with reference
numeral 86. By means of this material said mechanical tight fit between said outer jackets 14, 16, respectively, on the inner circumference thereof with the duct ends 10, 12, respectively, on the outer circumference thereof is achieved.

In the event that the tight fit between said jackets 14, 16, respectively, and said duct ends 10, 12, respectively, is achieved by means of laser welding or welding, said glue-fill-in-openings 84 are not necessary.

Figure 9 shows a detail of the second embodiment according to figure 7 as well as the first embodiment according to figure 4.

Said first outer shell section 66 and said second outer shell section 68 are engaged with each other. For this purpose said hook- shaped elements 74 are introduced into openings 70 of the respective first and second outer shell sections 66, 68 engaged with one another to form an outer shell 20 surrounding said first jacket 14 and said second jacket 16 in its entirety, i.e. about 360 °. Both shell sections 66, 68 are preferably identical parts. In figure 9 it is shown, that said second outer shell section's 68 comprises said hook-shaped element 74, engages the opening 70 of the second first shell section 66. Reference numeral 12, is the duct end surrounded by the combination of said first outer shell section 66 and the respective second outer shell section 68 forming said outer shell 20 in its entirety i.e. surrounding said jackets 14, 16 in an angle of about 360 °.

Figure 10 shows a further, third embodiment of the coupling device according to the present invention.

According to figure 10, a "four-rib"-design 100 is shown. With "four-rib" design 100 it is meant, that said jackets, i.e. said first jacket 14 and said second jacket 16 each comprise the first annular rib 50, said second annular rib 52, said third annular rib 54 as well as a further, i.e. fourth annular rib 102 in an axial distance space apart from said third annular rib 54. Said coupling device 18 comprises said first cable tie 80 and the second cable tie arrangement 82 similar to the those of the coupling device 18 according to the second embodiment of the present invention.

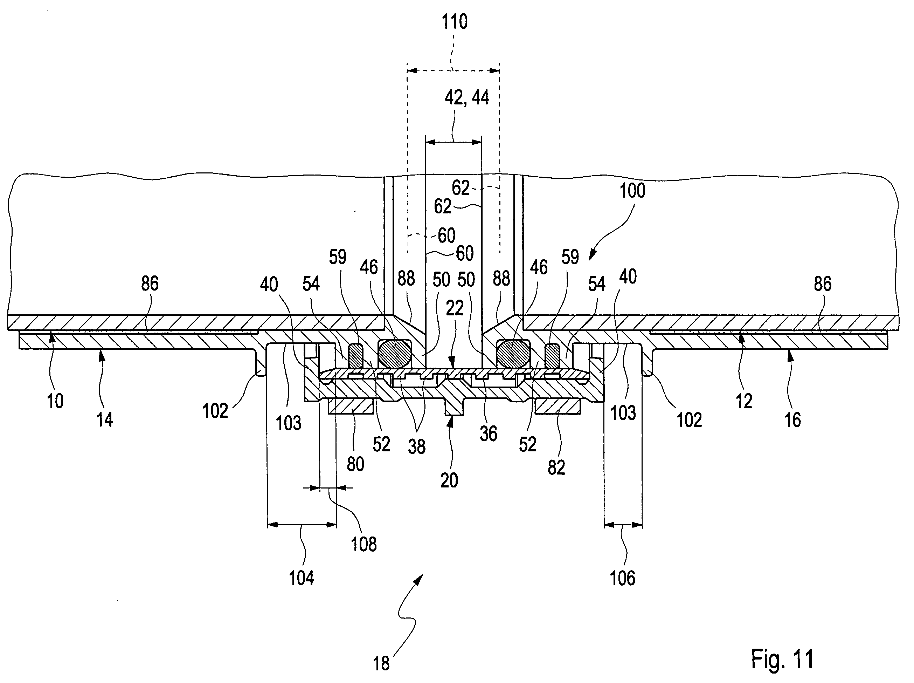

In the cross section given in greater detail in figures 10 and 11, respectively, it is shown that said annular shaped first sealing element 46 as well as a further annular shaped sealing element 59 are arranged on the outer circumference of said jackets 14, 16. This means, that both sealing elements 46, 59 are being housed between ribs 50, 52, and 52, 54, respectively, provided on the outer circumference of said jackets 14, 16. Those are securely tightened to said duct ends 10, 12 of the ducts, transporting a liquid, such as fresh water, waste water, waste water containing solids or the like, fuel or a hydraulic fluid in aircraft applications.

In figure 10 it is revealed, that said endfaces 60, 62 of said duct ends 10, 12, respectively, are arranged having a gap 42 within each other which has a gap width 44. Said gap 42 shown in figure 10 constitutes an insulation gap between said confronting duct ends 10, 12, respectively. It can be further derived from figure 10 that said end faces 60, 62 each comprise an inclined portion 88, which reduces a potential impact of solids or solid particles when contacting said end faces 60, 62, thus preventing mechanical damages thereof. In this third embodiment according to figure 10, said jackets 14, 16, respectively, comprise a fourth annular rib 102, which may be formed continuously or partially around the circumference of said jackets 14, 16, and which is being arranged in a distance with respect to said third annular rib, further annular rib 54 of said jackets 14, 16, respectively, according to the first and second embodiments, shown in figures 1-9.

Figure 10 reveals that according to the third embodiment of the present invention, said end faces 60, 62 of the duct ends 10, 12, respectively, are arranged with respect to one another forming a gap 42. A sealing function in this third embodiment of the coupling device 18 is performed by the first annular shaped sealing element 46 and a further annular shaped sealing element 59 establishing an electrical conductive connection for example. Reference numeral 103 identifies an axially extending recess, between the fourth and third annular shaped rib 54, i.e. the further annular rib provided on the jackets 14, 16, respectively, and a fourth annular rib 102, being likewise provided in circumferential direction on the circumferences of said first and second jackets 14, 16, respectively. According to the third embodiment given in figure 10, this arrangement may comprise the second sealing element 58 as shown in figure 1 and in a circumference of the jacket in a recess 56. Even when this detail is omitted in the embodiment according to figure 10, all three sealing elements having different functions may be used within the coupling device 18 according to the present invention. The sealing function between the end ducts 10, 12 can be performed by the first sealing element alone, whereas the establishment of an electrical conductive connection between the end ducts 10 and 12 and said inner shell 22, the outer shell 20 may be established by said third annular sealing element labelled with reference numeral 59.

Detail XI shows the area of the third embodiment which is given in a larger scale in figure 11.

According to the cross-section given in figure 11 it becomes clear, that said first and second jackets 14, 16 are tightly fitted to said first and second duct end 10, 12, respectively. Said first and second jackets 14, 16 each comprise said first annular rib 50, the second annular rib 52, the third annular rib 54 as well as the fourth annular rib 102. Between said first annular extending rib 50 and said second annular extending rib 52 the first annular shaped sealing element 46 is provided serving sealing purposes between said jacket 14, 16 and said inner shell 22 only. Between said second annular extending rib 52 and said third annular rib 54 said second annular extending sealing element 58 may be engaged, likewise serving sealing functions between said duct end 10, 12 and said jackets 14, 16. According to the cross section given in figure 11, the fourth annular rib 102 defines an axially extending recess 103 between said fourth annular extending rib 102 and said third i.e. further annular rib 54. This recess 103 is engaged by said radially inward extending ribs 40 or rib portions 40 of the outer shell 20.

Since said radially inward extending ribs 40 dive into the axial recess 103, a displacement of said end faces 60, 62, respectively, having the inclined portions 88 for preventing damage by collision of solids, of said duct ends 10, 12 in axial direction is possible without the sudden loss of the sealing function. Reference numeral 44 depicts a gap width of a gap 42 serving insulation purposes between said end faces 60, 62. In dotted lines, a theoretical maximum gap width 110 is indicated between said end faces 60, 62, respectively, when torn apart entirely in horizontal direction. The maximum gap width 110 is reached, when on both jackets 14, 16 with respect to the axially extending recess 103 the first width portion 106 reaches its maximum value and simultaneously said second width portion 108 becomes zero.

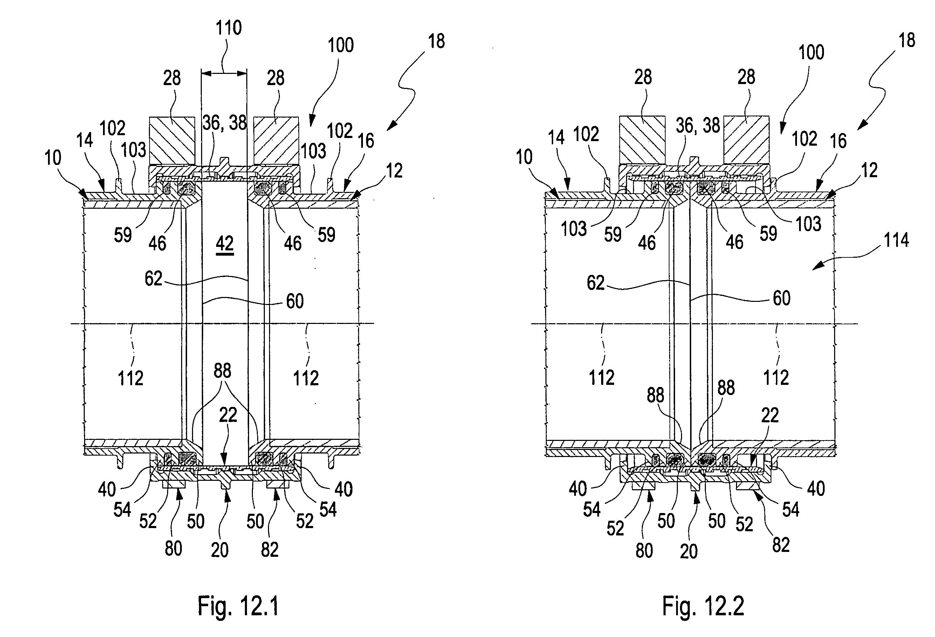

If, however, said second width portion 108 on both jackets 14, 16 adopts the value zero, then said coupling device 18 endeavors its maximum axial tension load and the mechanical force is transmitted by the following components: beginning with the first duct end 10 to said tightly mounted first jacket, further by the third annular rib 54 to said inner ribs 40 of said outer shell 20 via the other inner rib 40 at the opposite end of said outer shell 20 to the corresponding third annular rib 54 of the jacket 16 of the other duct end 12. This operating condition is best shown in Figure 12.1.

In the case that the coupling is axial compression loaded, both first width portions 106 simultaneously intend to become zero, the gap width 44 reaches, before this occurs, the value zero. Therefore the load path can be easily determined as the following components: Via first duct end 10, to first jacket 14 to the end face 60 of the first duct 10, the end face 62 of the second duct end 12 to the second jacket 16 and the second duct end 12.

In a third scenario the second width portion 108 becomes zero as well as the first width portion 106. Then an extreme asymmetrical position is reached. To limit this extreme asymmetrical position the fourth annular rib 102 pushes against said radially inward extending rib or rib portion 40 of said outer shell 20 to move the whole coupling 18 into a more an ideal position. In the various embodiments described heretofore, said annular-shaped sealing elements 46, 58 and 59 may serve different purposes, even in combination with each other:
Said sealing elements listed above, i.e. components 46, 48 and 159, respectively, may be used for redundancy purposes as well as in the sense of a task separation. Whereas one of the three sealing elements serves the sealing function, the other one may establish electrical conductivity whereas the third sealing element may be arranged for redundancy purposes only. The sealing function concerns the separation of the medium transported and the glue, i.e. this is the case when the jackets 14, 16 are tightly fitted by means of an adhesive to the duct ends 10, 12. This separation of functions can thus be seen in connection with the second sealing element 58, when arranged in the inner recess as shown in the embodiment according to figure 3. In this embodiment according to figure 3 said second sealing element 58 has a sealing function between the duct ends 10, 12, i.e. the medium transported therein and the outer jackets 14, 16. If, however arranged on the outer circumference on said jackets 14, 16, said sealing element 59 may adopt the function of establishing electric conductivity. Both sealing elements i.e. the second sealing element 58 as well as the sealing element 59 may be used in a parallel i.e. at the same time in a coupling devise according to the present invention.

The ideal position of the coupling 18 according to the present invention will be realized during installation by adjusting said gap 42 to a predetermined value. During operation the coupling 18 compensates for axial as well as angular deformation as best shown in the following figures 12.1 to 12.4. These deformations may occur from aircraft fuselage deformation, thermal expansion behavior or any other reason. While compensating deformations, the couplingl8 according to the present invention could reach one of the above-mentioned extreme positions. Especially when adopting an asymmetric position, the contact between said fourth annular rib 102 and said inner rib 40 or said inner rib portions limit the whole coupling 18 to-move into another position. This adjustment are compensating property of the coupling 18 according to the present invention improves operation and durability.

In figures 12.1 - 12.4 a variety of operating conditions is disclosed.

According to figure 12.1, said duct ends 10, 12 the first jacket 14 and the second jacket 16 are shown in a substantially horizontal orientation 112. In the operating conditionsaccording to figure 12.1 said end faces 60, 62 of the duct ends 10, 12, respectively, form a maximum gap width 110, i.e. said flanges of said duct ends 10, 12 do not contact each other in this operating condition. The components 40 and 54 contact each other. In the embodiment given in figure 12.1 of the coupling device 18 the coupling device 18 is secured by said first cable tie 80 and the second cable tie arrangement 82, respectively. In said jackets 14, 16 the first annular shaped sealing element 46 as well as the second annular shaped sealing element 59 are arranged on the outer circumference of said jackets 14, 16, respectively, located between said first annular ribs 50, 52 and said second annular ribs 52 and third annular rib 54, respectively. Reference numeral 103 identifies a recess engaged by said inner ribs or inner annular rib portions 40 of the outer shell 20, 66, 68.

In figure 12.2 operating conditions of a third embodiment of the coupling device 18 according to the present invention are shown within which said end faces 60, 62 of the duct ends 10, 12, contact each other. This means, that in the third embodiment of the present invention, as shown in figure 12.2 the gap width 44 is zero, i.e. said flanges of the end faces 60, 62 of the duct ends 10, 12 provided with the respective jackets 14, 16 contact each other. Further, said fourth annular rib 102 and said radially inwardly extending rib 40 or rib portion 40 contact each other.

Both components i.e. said inner rib 40 or said inner rib portions 40 of said outer shell 20 as well as said fourth annular rib 102 prevent the coupling device 18 according to the present invention to move further into a asymmetrical position. The hypothetical theoretical ideal position of the coupling device 18 according to the present invention is best shown in figure 11.

A sealing function in this horizontal orientation 112 of the duct ends 10, 12 and the jackets 14, 16 respectively is performed by means of the annular shaped first sealing elements 46 and said second annular shaped sealing elements 59 provided on said jackets 14, 16 respectively. A cross-section of said sealing elements 46, 58 and 59 may be rectangular, circular, oval, square-shaped, X-shaped, or trapezoidal or triangular.

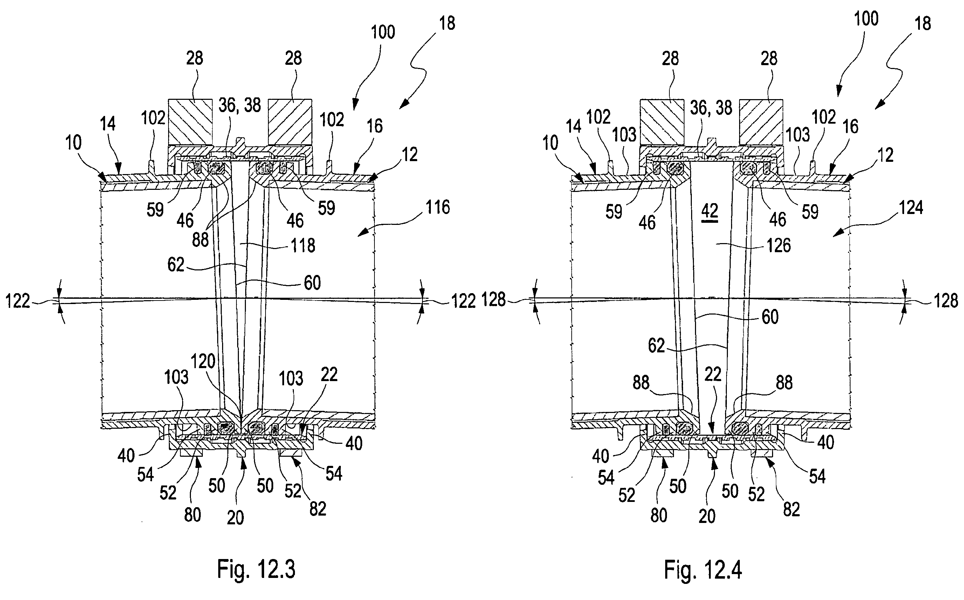

According to the operating instructions given in figure 12.2, it is clearly derivable that said jackets 14, 16 provided on the circumference of said jackets 14, 16 are arranged in a substantially horizontal orientation 112. According to figure 12.2 said radially inward extending ribs 40 arranged on the circumference of the outer shell 20 engage the fourth annular shape rib 102 provided on the outer circumference of said jackets 14, 16. Figures 12.3 and 12.4, respectively, disclose operating conditions, within which, said jackets 14, 16 respectively, tightly secured to the outer circumference of said duct ends 10, 12, respectively, adopt angled orientations 116 and 124, respectively.

Operating conditions in figure 12.3 contacting flanges 120 show, that a triangular - shaped gap 118 is formed between said endfaces 60, 62 of the duct end 10, 12 respectively. This means, that according to these operating conditions of the coupling device 18 angular displacements are being compensated for by the coupling device 18, including said outer shell 20 and said inner shell 22, respectively. In the operating conditions shown in figure 12.3, the gap 42 between the end faces 60, 62 adopts a triangular shape, whereas in the operating conditions according to figure 12.4, the gap between the endfaces 60, 62 of the first duct ends 10 and the second duct end 12, respectively adopts a rather trapezoidal-shaped gap 126.

In the operating conditions according to the figures 12.3 and 12.4 angular displacements of the end duct portions 10, 12 i.e. the jackets 14, 16 are shown in both variations i.e. having contacting flanges 120 as shown in figure 12.3 or having non-contacting flanges according to the trapezoidal-shaped gap 126 as shown in figure 12.4.

With respect to the present invention ducts in the sense of the present invention are to be understood as fluid-carrying ducts or pipes made of a non-metallic material, preferably high-performance thermoplastic material such as PEEK or PPS or another reinforced or not reinforced plastic or glass fibers comprising material. The fluid to be transported in the ducts according to the present invention may be water, waste water, water containing solids and/or particles, fuel or a hydraulic fluid for use within an aerospace or an aircraft application

**Reference Numeral List**

| | | | |
|---|---|---|---|
| 10 | first duct end | 62 | endface of second duct 12 |
| 12 | second duct end | 64 | maximum width of gap |
| 14 | 1. Jacket | 66 | first outer shell section |
| 16 | 2. Jacket | 68 | second outer shell section |
| 18 | coupling device | 70 | opening |
| 20 | outer shell | 72 | connecting region |
| 22 | inner shell | 74 | hook shaped elements |
| | | 80 | first cable tie |
| 26 | cable tie end | 82 | second cable tie |
| 28 | cable tie cage | 84 | glue-fill-opening |
| 30 | markers | 86 | glue |
| 32 | triangular-shape | 88 | inclined portion |
| 36 | inner shell's mantle | 90 | |
| 38 | ribbed-structure | 92 | |
| 40 | inner ribs of outer shell | 94 | |
| 42 | gap | 96 | |
| 44 | gap width | 98 | |
| 46 | first sealing element | 100 | four-rib-design (Fig. 10 ff) |
| 48 | outer recess | 102 | fourth annular rib |
| 50 | first annular rib | 103 | axial recess |
| 52 | second annular rib | 104 | entire width of recess |
| 54 | third annular rib | 106 | first width portion |
| 56 | inner recess | 108 | second width portion |
| 58 | second sealing element | 110 | maximum gap width |
| 59 | further sealing element | 112 | horizontal orientation |
| 60 | endface of first duct 10 | | |
| 114 | "Face to Face"-orientation | | |
| 116 | first angled orientation | | |
| 118 | triangular shaped gap | | |
| 120 | contacting flanges | | |
| 122 | first angle | | |
| 124 | second angled orientation | | |
| 126 | trapezoidal-shaped gap | | |
| 128 | second displacement angle | | |

## Claims

1. Coupling device comprising:
- at least two jackets (14, 16) for duct ends
- the jackets each comprising at least first and second annular ribs housing a first annular sealing element (46) engaged by an inner shell,
- each jacket comprising a further rib (54) being a third rib,
- wherein said coupling device made of a high-performance thermoplastic material,
- wherein said coupling device includes an outer shell (20; 66; 68) having at least one radially inward extending rib (40),
engaging an axially extending recess (103) of said jackets **characterized in that**
- the recess is defined between said further annular rib (54) and a fourth annular rib (102),
to center said inner shell (22) and outer shell (20, 66, 68) in a beneficial position, allowing for both an axial movement of said duct ends (14, 12) relative to one another and/or an angular movement of said duct ends (10, 12) relative to one another, independent from maintaining a fluid-tight connection at said first annular sealing element (46), respectively.

2. Coupling device (18) according to claim 1, wherein said first annular sealing element (46) is arranged in an outer recess (48) of the jackets (14, 16) and a second annular sealing element (58) is arranged within an inner recess (56) of the jackets (14, 16), respectively.

3. Coupling device (18) according to claim 2, wherein said first and second annular sealing element (46, 58) are arranged both on the circumference of the jackets (14, 16).

4. Coupling device (18) according to any one of claims 1 to 3, wherein said duct ends (10, 12) are made of PEEK or PPS.

5. Coupling device (18) according to any one of claims 1 to 4, wherein said outer shell (20), comprises annular extending ribs (40, 50, 52, 54) or rib portions, arranged in axial end portions of said outer shell (20).

6. Coupling device (18) according to claim 5, wherein said annular extending ribs (40) or rib portions are arranged at the inner circumference of said outer shell (20; 66, 68).

7. Coupling device (18) according to any one of the claims 1 to 6, wherein said outer shell (20; 66; 68) is secured by at least one cable tie arrangement (80, 82).

8. Coupling device (18) according to any one of the claims 1 to 7, wherein said jackets (14, 16) comprise markers (30) to determine the respective jacket's (14, 16) position with respect to the outer shell (20; 66, 68) of said coupling device (18) and/or a gap width of an insulation gap width (, 44) of an insulation gap (42).

9. Coupling device (18) according to claim 8, wherein said markers (30) have a triangular shape (32) and are arranged in a 60°-section on the outer surface of said jackets (14, 16).

10. Coupling device (18) according to any one of the claims 1 to 9, wherein said outer shell (20) comprises a number of openings (34) to allow for visibility of said inner shell (22).

11. Coupling device (18) according to any one of the claims 1 to 10, wherein said inner shell (22) comprises a ribbed structure (38) provided on the outer circumference (36) defining the mechanical stability or rigidity of said inner shell (22).

12. Coupling device (18) according to any one of the claims 1 to 11, wherein said outer shell (20) includes two identical shell sections (66, 68) engaged with one another within respective connecting regions (72).

13. Coupling device (18) according to claim 12, wherein the shell sections (66, 68) include an elastic hook-shaped element (74), engaged by an opening (70) of the other shell section (66, 68) of the outer shell (20).

14. Coupling device (18) according to any one of the claims 2 to 13, wherein the second sealing element (58) is mounted between said second annular rib (52) and said further annular rib (54) on the outer or inner circumferences of said jackets (14, 16), respectively.

15. Coupling device (18) according to claim 8 or 9, wherein said markers (30) are printed or painted on the circumference of said jackets (14, 16).

16. Coupling device (18) according to one of the preceding claims, wherein the first and second sealing elements (46, 58,) have a rectangular, a square, a triangular, a trapezoidal, an oval, a circular or an X-shaped cross-section.

17. Coupling device (18) according to any one of the claims 1 to 16, wherein the components of said coupling device (18), said duct ends (10, 12), said jackets (14, 16), said outer shell (20), said inner shell (22) are made of PEEK or PPS.

18. Coupling device (18) according to one of the preceding claims, wherein one of said first and second annular sealing elements (46, 58,) serves a fluid sealing function, one of said first and second annular sealing elements is provided for redundancy purposes and a further sealing element is used for establishing an electrical conductive connection.

19. Coupling device (18) according to any one of the claims 1 to 18, wherein the components of said coupling device (18), said duct ends (10, 12), said jackets (14, 16), said inner shell (22) and said outer shell (20) are made of a media-resistant, temperature-reliable, reinforced or non-reinforced, electrically conductive or isolating plastic material.

20. Coupling device (18) according to the claim 19, wherein the temperature range of said media-resistant, electrically conductive or isolating plastic material lies within the range of about -50 °C to 100 °C.

21. Use of the coupling device (18), according to any one of the claims 1 to 20 in an aircraft appliance or aerospace appliance for releasably connecting confronting duct ends (10, 12) of fluid carrying ducts.

## Patentansprüche

1. Kupplungsvorrichtung, umfassend:
- zumindest zwei Umhüllungen (14, 16) für Leitungsenden,
- wobei die Umhüllungen jede zumindest erste und zweite ringförmige Rippen umfassen, die ein erstes ringförmiges Dichtungselement (46) einfassen, das durch eine Innenschale in Eingriff genommen ist,
- wobei jede Umhüllung eine weitere Rippe (54) umfasst, die eine dritte Rippe ist,
- wobei die Kupplungsvorrichtung aus einem Hochleistungsthermoplastmaterial hergestellt ist,
- wobei die Kupplungsvorrichtung eine Außenschale (20; 66; 68) mit zumindest einer radial nach innen verlaufenden Rippe (40) enthält,
die eine axial verlaufende Aussparung (103) der Umhüllungen in Eingriff nimmt, **dadurch gekennzeichnet, dass**
- die Aussparung zwischen der weiteren ringförmigen Rippe (54) und einer vierten ringförmigen Rippe (102) definiert ist, um die Innenschale (22) und Außenschale (20, 66, 68) in einer günstigen Position zu zentrieren, wodurch sowohl eine axiale Bewegung der Leitungsenden (10, 12) in Bezug zueinander und/oder eine Winkelbewegung der Leitungsenden (10, 12) in Bezug zueinander ermöglicht ist, unabhängig vom Aufrechterhalten einer jeweiligen fluiddichten Verbindung am ersten ringförmigen Dichtungselement (46).

2. Kupplungsvorrichtung (18) nach Anspruch 1, wobei das erste ringförmige Dichtungselement (46) in einer äußeren Aussparung (48) der Umhüllungen (14, 16) angeordnet ist bzw. ein zweites ringförmiges Dichtungselement (58) innerhalb einer inneren Aussparung (56) der Umhüllungen (14, 16) angeordnet ist.

3. Kupplungsvorrichtung (18) nach Anspruch 2, wobei das erste und zweite ringförmige Dichtungselement(46, 58) beide auf dem Umfang der Umhüllungen (14, 16) angeordnet sind.

4. Kupplungsvorrichtung (18) nach einem der Ansprüche 1 bis 3, wobei die Leitungsenden (10, 12) aus PEEK oder PPS hergestellt sind.

5. Kupplungsvorrichtung (18) nach einem der Ansprüche 1 bis 4, wobei die Außenschale (20) ringförmig verlaufende Rippen (40, 50, 52, 54) oder Rippenabschnitte umfasst, die in axialen Endabschnitten der Außenschale (20) angeordnet sind.

6. Kupplungsvorrichtung (18) nach Anspruch 5, wobei die ringförmig verlaufenden Rippen (40) oder Rippenabschnitte auf dem Innenumfang der Außenschale (20; 66, 68) angeordnet sind.

7. Kupplungsvorrichtung (18) nach einem der Ansprüche 1 bis 6, wobei die Außenschale (20; 66; 68) durch zumindest eine Kabelbinderanordnung (80, 82) befestigt ist.

8. Kupplungsvorrichtung (18) nach einem der Ansprüche 1 bis 7, wobei die Umhüllungen (14, 16) Markierungen (30) zum Bestimmen der Position der jeweiligen Umhüllung (14, 16) bezüglich der Außenschale (20; 66, 68) der Kupplungsvorrichtung (18) und/oder einer Spaltbreite einer Isolierungsspaltbreite (44) eines Isolierungsspalts (42) umfassen.

9. Kupplungsvorrichtung (18) nach Anspruch 8, wobei die Markierungen (30) eine Dreieckform (32) aufweisen und in einer 60°-Sektion auf der Außenfläche der Umhüllungen (14, 16) angeordnet sind.

10. Kupplungsvorrichtung (18) nach einem der Ansprüche 1 bis 9, wobei die Außenschale (20) eine Anzahl Öffnungen (34) umfasst, um Sichtbarkeit der Innenschale (22) zu ermöglichen.

11. Kupplungsvorrichtung (18) nach einem der Ansprüche 1 bis 10, wobei die Innenschale (22) eine gerippte Struktur (38) umfasst, die auf dem Außenumfang (36) vorgesehen ist und die mechanische Stabilität oder Starrheit der Innenschale (22) definiert.

12. Kupplungsvorrichtung (18) nach einem der Ansprüche 1 bis 11, wobei die Außenschale (20) zwei identische Schalensektionen (66, 68) enthält, die innerhalb von jeweiligen Verbindungsbereichen (72) miteinander in Eingriff stehen.

13. Kupplungsvorrichtung (18) nach Anspruch 12, wobei die schalensektionen (66, 68) ein elastisches hakenförmiges Element (74) enthalten, das durch eine Öffnung (70) der anderen Schalensektion (66, 68) der Außenschale (20) in Eingriff genommen ist.

14. Kupplungsvorrichtung (18) nach einem der Ansprüche 2 bis 13, wobei das zweite Dichtungselement (58) zwischen der zweiten ringförmigen Rippe (52) und der weiteren ringförmigen Rippe (54) jeweils auf den Außen- oder Innenumfängen der Umhüllungen (14, 16) angebracht ist.

15. Kupplungsvorrichtung (18) nach einem der Ansprüche 8 oder 9, wobei die Markierungen (30) auf den Außenumfang der Umhüllungen (14, 16) gedruckt oder lackiert sind.

16. Kupplungsvorrichtung (18) nach einem der vorhergehenden Ansprüche, wobei die ersten und zweiten Dichtungselemente (46, 58) einen rechteckigen, einen quadratischen, einen dreieckigen, einen trapezförmigen, einen ovalen, einen kreisförmigen oder einen X-förmigen Querschnitt aufweisen.

17. Kupplungsvorrichtung (18) nach einem der Ansprüche 1 bis 16, wobei die Bauteile der Kupplungsvorrichtung (18), die Leitungsenden (10, 12), die Umhüllungen (14, 16), die Außenschale (20), die Innenschale (22) aus PEEK oder PPS hergestellt sind.

18. Kupplungsvorrichtung (18) nach einem der vorhergehenden Ansprüche, wobei eines der ersten und zweiten ringförmigen Dichtungselemente (46, 58) als Fluiddichtungsfunktion dient, eines der ersten und zweiten ringförmigen Dichtungselemente zu Redundanzzwecken vorgesehen ist und ein weiteres Dichtungselement zum Einrichten einer elektrischen leitfähigen Verbindung benutzt ist.

19. Kupplungsvorrichtung (18) nach einem der Ansprüche 1 bis 18, wobei die Bauteile der Kupplungsvorrichtung (18), die Leitungsenden (10, 12), die Umhüllungen (14, 16), die Innenschale (22) und die Außenschale (20) aus einem medienresistenten, temperatursicheren, verstärkten oder nicht verstärkten, elektrisch leitfähigen oder isolierenden Kunststoffmaterial hergestellt sind.

20. Kupplungsvorrichtung (18) nach Anspruch 19, wobei der Temperaturbereich des medienresistenten, elektrisch leitfähigen oder isolierenden Kunststoffmaterials innerhalb des Bereichs von ungefähr -50 °C bis 100 °C liegt.

21. Gebrauch der Kupplungsvorrichtung (18) nach einem der Ansprüche 1 bis 20 in einem Luftfahrtgerät oder Raumfahrtgerät zum lösbaren Verbinden von konfrontierenden Leitungsenden (10, 12) von fluidbefördernden Leitungen.

## Revendications

1. Dispositif de couplage, comprenant:
- au moins deux chemises (14, 16) pour des extrémités de conduit,
- les chemises comportant chacune au moins une première et une deuxième nervures logeant un premier élément d'étanchéité annulaire (46) engagé par une enveloppe intérieure,
- chaque chemise comportant une nervure supplémentaire (54) qui est une troisième nervure,
- dans lequel ledit dispositif *de couplage est constitué d'un matériau thermoplastique à haute performance,
- dans lequel ledit dispositif de couplage comprend une enveloppe extérieure (20; 66; 68) comportant au moins une nervure s'étendant radialement vers l'intérieur (40),
qui engage un évidement s'étendant axialement (103) desdites chemises,
**caractérisé en ce que** l'évidement est défini entre ladite nervure annulaire supplémentaire (54) et une quatrième nervure annulaire (102), afin de centrer ladite enveloppe intérieure (22) et ladite enveloppe extérieure (20, 66, 68) dans une position avantageuse, permettant pour les deux un déplacement axial desdites extrémités de conduit (10, 12) l'une par rapport à l'autre, et/ou un déplacement angulaire desdites extrémités de conduit (10, 12) l'une par rapport à l'autre, indépendamment du maintien d'une connexion étanche au fluide audit premier élément d'étanchéité annulaire (46), respectivement.

2. Dispositif de couplage (18) selon la revendication 1, dans lequel ledit premier élément d'étanchéité annulaire (46) est agencé dans un évidement extérieur (48) des chemises (14, 16), et un deuxième élément d'étanchéité annulaire (58) est agencé à l'intérieur d'un évidement intérieur (56) des chemises (14, 16), respectivement.

3. Dispositif de couplage (18) selon la revendication 2, dans lequel lesdits premier et deuxième éléments d'étanchéité annulaires (46, 58) sont agencés tous les deux sur la circonférence des chemises (14, 16).

4. Dispositif de couplage (18) selon l'une quelconque des revendications 1 à 3, dans lequel lesdites extrémités de conduit (10, 12) sont constituées de PEEK ou de PPS.

5. Dispositif de couplage (18) selon l'une quelconque des revendications 1 à 4, dans lequel ledit enveloppe extérieure (20) comporte des nervures (40, 50, 52, 54) ou des parties de nervure s'étendant de façon annulaire, agencées dans des parties d'extrémité axiales de ladite enveloppe extérieure (20).

6. Dispositif de couplage (18) selon la revendication 5, dans lequel lesdites nervures (40) ou parties de nervure s'étendant de façon annulaire sont agencées à la circonférence intérieure de ladite enveloppe extérieure (20; 66, 68).

7. Dispositif de couplage (18) selon l'une quelconque des revendications 1 à 6, dans lequel ladite enveloppe extérieure (20; 66; 68) est fixée par au moins un agencement d'attache de câble (80, 82).

8. Dispositif de couplage (18) selon l'une quelconque des revendications 1 à 7, dans lequel lesdites chemises (14, 16) comprennent des marqueurs (30) pour déterminer la position respective des chemises (14, 16) par rapport à l'enveloppe extérieure (20; 66, 68) dudit dispositif de couplage (18) et/ou une largeur d'espace d'une largeur d'espace d'isolation (44) d'un espace d'isolation (42).

9. Dispositif de couplage (18) selon la revendication 8, dans lequel lesdits marqueurs (30) ont une forme triangulaire (32) et sont agencés dans une section à 60° sur la surface extérieure desdites chemises (14, 16).

10. Dispositif de couplage (18) selon l'une quelconque des revendications 1 à 9, dans lequel ladite enveloppe extérieure (20) comporte un certain nombre d'ouvertures (34) destinées à permettre la visibilité de ladite enveloppe inférieure (22).

11. Dispositif de couplage (18) selon l'une quelconque des revendications 1 à 10, dans lequel ladite enveloppe intérieure (22) comprend une structure nervurée (38) prévue sur la circonférence extérieure (36) et définissant la stabilité ou la rigidité mécanique de ladite enveloppe intérieure (22).

12. Dispositif de couplage (18) selon l'une quelconque des revendications 1 à 11, dans lequel ladite enveloppe extérieure (20) comprend deux sections d'enveloppe identiques (66, 68) engagées l'une avec l'autre à l'intérieur de régions de connexion respectives (72).

13. Dispositif de couplage (18) selon la revendication 12, dans lequel les sections d'enveloppe (66, 68) comprennent un élément élastique en forme de crochet (74), engagé par une ouverture (70) de l'autre section d'enveloppe (66, 68) de l'enveloppe extérieure (20).

14. Dispositif de couplage (18) selon l'une quelconque des revendications 2 à 13, dans lequel le deuxième élément d'étanchéité (58) est monté entre ladite deuxième nervure annulaire (52) et ladite nervure annulaire supplémentaire (54) sur les circonférences extérieure ou intérieure desdites chemises (14, 16), respectivement.

15. Dispositif de couplage (18) selon la revendication 8 ou 9, dans lequel lesdits marqueurs (30) sont imprimés ou peints sur la circonférence desdites chemises (14, 16).

16. Dispositif de couplage (18) selon l'une des revendications précédentes, dans lequel les premier et deuxième éléments d'étanchéité (46, 58) présentent une section transversale de forme rectangulaire, carrée, triangulaire, trapézoïdale, ovale, circulaire ou cruciforme.

17. Dispositif de couplage (18) selon l'une quelconque des revendications 1 à 16, dans lequel les composants dudit dispositif de couplage (18), desdites extrémités de conduit (10, 12), desdites chemises (14, 16), de ladite enveloppe extérieure (20) et de ladite enveloppe intérieure (22) sont constitués de PEEK ou de PPS.

18. Dispositif de couplage (18) selon l'une des revendications précédentes, dans lequel un desdits premier et deuxième éléments d'étanchéité annulaires (46, 58) remplit une fonction d'étanchéité au fluide, un desdits premier et deuxième éléments d'étanchéité annulaires est prévu dans un but de redondance, et un élément d'étanchéité supplémentaire est utilisé pour établir une connexion électriquement conductrice.

19. Dispositif de couplage (18) selon l'une quelconque des revendications 1 à 18, dans lequel les composant dudit dispositif de couplage (18), desdites extrémités de conduit (10, 12), desdites chemises (14, 16), de ladite enveloppe intérieure (22) et ladite enveloppe extérieure (20) sont constitués d'un matériau plastique électriquement conducteur ou isolant, renforcé ou non renforcé, thermiquement stable et résistant aux fluides.

20. Dispositif de couplage (18) selon la revendication 19, dans lequel la plage de température dudit matériau plastique thermiquement isolant ou conducteur résistant aux fluides se situe à l'intérieur de la gamme d'environ -50°C à 100°C.

21. Utilisation du dispositif de couplage (18) selon l'une quelconque des revendications 1 à 20 dans un aéronef ou un appareil aérospatial pour connecter de façon détachable des extrémités de conduit opposées (10, 12) de conduits de transport de fluide.
